# EUROPEAN PATENT APPLICATION

(11) **EP 4 790 507 A1**
(43) Date of publication of application: **12.08.2026**
(21) Application number: 23955263.1
(22) Date of filing: 06.11.2023
(51) Int. Cl.: G05D 1/43

(54) **KEY REGION CLEANING METHOD AND APPARATUS, AND CLEANING MACHINE AND STORAGE MEDIUM**

(30) Priority: 08.10.2023 CN 202311306008
(71) Applicant: Shenzhen Hanyang Technology Co., Ltd., Shenzhen, Guangdong 518000 (CN)
(72) Inventor: HUANG, Yang, Shenzhen, Guangdong 518000 (CN)
(74) Representative: Abel & Imray LLP
(86) International application number: PCT/CN2023/129978
(87) International publication number: WO 2025/076893

(57) **Abstract**

Provided are a method and device for cleaning a key region, a cleaning machine, and a storage medium. The method includes: recording, when a cleaning machine performs a first cleaning operation on a preset cleaning region and if it is detected that the cleaning machine triggers a preset cleaning problem, a cleaning region corresponding to the triggered preset cleaning problem as a key region; obtaining a secondary cleaning sequence by arranging, after the first cleaning operation is completed, all the key regions recorded in the first cleaning operation in a cleaning sequence according to a preset arrangement rule; and controlling the cleaning machine to perform a second cleaning operation on all the key regions according to the secondary cleaning sequence.

## Description

### CROSS-REFERENCE TO RELATED APPLICATIONS

This application claims priority to Chinese Patent Application No. 202311306008.6, filed to the CNIPA on October 8, 2023 and entitled "METHOD AND DEVICE FOR CLEANING KEY REGION, CLEANING MACHINE, AND STORAGE MEDIUM", the entire contents of which are incorporated herein by reference.

### TECHNICAL FIELD

The present application relates to the technical field of cleaning, in particular to a method and device for cleaning a key region, a cleaning machine, and a storage medium.

### BACKGROUND

At present, with the gradual development of society, intelligent cleaning machines play an important role in people's lives, such as a snow sweeper, which can effectively reduce human workload and improve work efficiency. The inventor realized that during the self-moving operation of some cleaning machines, a boundary shape of a working region is complex and affected by various obstacles (for example, a working region in the snow sweeper is affected by thick snow accumulation or ground bumps/icicles/crevices), which may lead to a complex environment in which the working region of the cleaning machine is located, resulting in the omission of some working regions, reducing the cleaning efficiency of the cleaning machine, and causing adverse effects such as poor user experience. In addition, some manually driven cleaning machines can only manually judge which regions require key cleaning when cleaning the working regions that require key cleaning. At the same time, manual adjustments are required multiple times to clean the key regions, which is not highly intelligent and time-consuming.

### SUMMARY

Embodiments of the present application provide a method and device for cleaning a key region, a cleaning machine, and a storage medium, so as to solve the technical problems of a missed region during cleaning, a low intelligence level, and long time consumption in a cleaning machine during cleaning in the prior art.

A method for cleaning a key region includes:
recording, when a cleaning machine performs a first cleaning operation on a preset cleaning region and if it is detected that the cleaning machine triggers a preset cleaning problem, a cleaning region corresponding to the triggered preset cleaning problem as a key region;
obtaining a secondary cleaning sequence by arranging, after the first cleaning operation is completed, all the key regions recorded in the first cleaning operation in a cleaning sequence according to a preset arrangement rule; and
controlling the cleaning machine to perform a second cleaning operation on all the key regions according to the secondary cleaning sequence.

A cleaning machine includes a traveling device, a cleaning device, and a controller, the controller includes a memory, a processor, and computer-readable instructions stored in the memory and runnable on the processor, and the processor, when executing the computer-readable instructions, controls the traveling device and the cleaning device to implement the following steps:
recording, when the cleaning machine performs a first cleaning operation on a preset cleaning region and if it is detected that the cleaning machine triggers a preset cleaning problem, a cleaning region corresponding to the triggered preset cleaning problem as a key region;
obtaining a secondary cleaning sequence by arranging, after the first cleaning operation is completed, all the key regions recorded in the first cleaning operation in a cleaning sequence according to a preset arrangement rule; and
controlling the cleaning machine to perform a second cleaning operation on all the key regions according to the secondary cleaning sequence.

A computer-readable storage medium stores computer-readable instructions, and the computer-readable instructions, when executed by a processor, implement the following steps:
recording, when a cleaning machine performs a first cleaning operation on a preset cleaning region and if it is detected that the cleaning machine triggers a preset cleaning problem, a cleaning region corresponding to the triggered preset cleaning problem as a key region;
obtaining a secondary cleaning sequence by arranging, after the first cleaning operation is completed, all the key regions recorded in the first cleaning operation in a cleaning sequence according to a preset arrangement rule; and
controlling the cleaning machine to perform a second cleaning operation on all the key regions according to the secondary cleaning sequence.

According to the method and device for cleaning the key region, the cleaning machine, and the storage medium provided by the present application, the method includes: recording, when a cleaning machine performs a first cleaning operation on a preset cleaning region and if it is detected that the cleaning machine triggers a preset cleaning problem, a cleaning region corresponding to the triggered preset cleaning problem as a key region; obtaining a secondary cleaning sequence by arranging, after the first cleaning operation is completed, all the key regions recorded in the first cleaning operation in a cleaning sequence according to a preset arrangement rule; and controlling the cleaning machine to perform a second cleaning operation on all the key regions according to the secondary cleaning sequence.

In the present application, in a first cleaning process, the key regions corresponding to all machines with the preset cleaning problem in the entire preset cleaning region are recorded, then the secondary cleaning sequence is planned according to the recorded key regions, and then the second cleaning operation is performed on all the key regions again according to the above secondary cleaning sequence. In this way, within the same preset cleaning region, the present application carries out targeted secondary cleaning on all the key regions that trigger the preset cleaning problem, without any missed region during cleaning, thereby ensuring a cleaning effect on each preset cleaning region. Secondly, due to the automatic planning of the secondary cleaning sequence for all the key regions, there is no need for manual participation in the planning, which improves the intelligence level of the cleaning process, saves cleaning time, and greatly enhances the efficiency of secondary cleaning.

Details of one or more embodiments of the present application are provided in the accompanying drawings and descriptions below, and other features and advantages of the present application become apparent from the specification, the accompanying drawings, and claims.

### BRIEF DESCRIPTION OF DRAWING(S)

To describe technical solutions in embodiments of the present application more clearly, the following briefly introduces accompanying drawings required for describing the embodiments of the present application. Apparently, the accompanying drawings in the following description show only some embodiments of the present application, and those ordinarily skilled in the art may still derive other accompanying drawings from these accompanying drawings without creative efforts.
FIG. 1 is a flowchart of a method for cleaning a key region in one embodiment of the present application;
FIG. 2 is a flowchart of step S30 of a method for cleaning a key region in one embodiment of the present application;
FIG. 3 is a functional block diagram of a device for cleaning a key region in one embodiment of the present application;

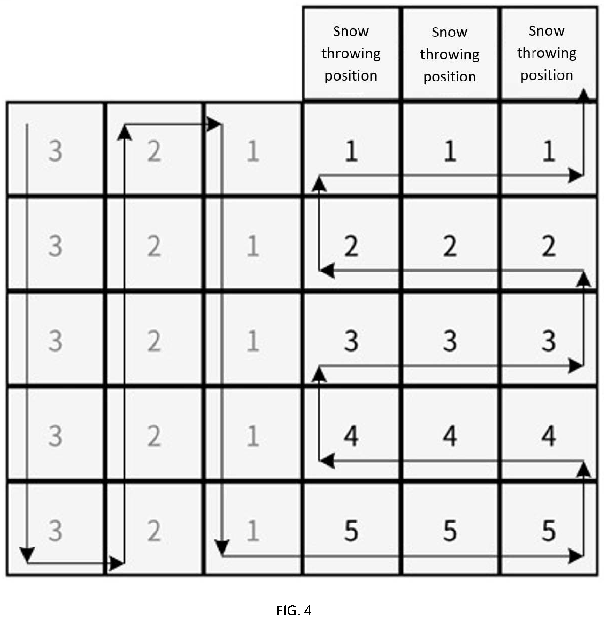

FIG. 4 is a schematic diagram of working path planning in a method for cleaning a key region in an embodiment of the present application; and
FIG. 5 is a schematic diagram of a controller in one embodiment of the present application.

### DETAILED DESCRIPTION

The technical solutions in the embodiments of the present application will be clearly and completely described in the following with reference to the accompanying drawings in the embodiments of the present application. Apparently, the described embodiments are some rather than all of the embodiments of the present application. All other embodiments obtained by those ordinarily skilled in the art based on the embodiments in the present application without making creative efforts shall fall within the scope of protection of the present application.

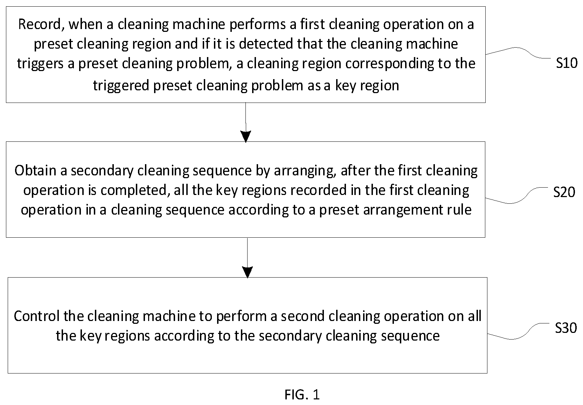

In one embodiment, as shown in FIG. 1, provided is a method for cleaning a key region, which may be applied to a cleaning machine, and includes the following steps.

S10, when a cleaning machine performs a first cleaning operation on a preset cleaning region and if it is detected that the cleaning machine triggers a preset cleaning problem, a cleaning region corresponding to the triggered preset cleaning problem is recorded as a key region. Understandably, the preset cleaning problem includes, but is not limited to, an obstacle problem, a problem of thick snow accumulation, a slipping problem (including a problem of multiple slipping), a problem of poor network, etc. The obstacle problem refers to an obstacle related problem encountered by the cleaning machine, such as encountering a movable obstacle (such as a moving car, an animal, or an object that may be moved by humans). At this time, after the cleaning machine passes around the movable obstacle, the obstacle subsequently continues to be moved, and a region previously covered by the obstacle has not been cleaned. Therefore, the cleaning region covered by the movable obstacle needs to be recorded as the key region. The problem of thick snow accumulation and some other preset cleaning problems (such as a position point where the cleaning machine gets out of a trap) may also cause the slipping problem. Therefore, setting of the specific preset cleaning problem may be determined according to needs. Slipping refers to a state where a positioning sensor and a real-time kinematic (RTK) module of the cleaning machine determine that a position of the cleaning machine has not moved, but wheels have actually moved. For example, when a snow sweeper (cleaning machine) encounters ground bumps, icicles, or crevices during a snow shoveling process, the snow sweeper moves onto a snow drift, the positioning sensor of the snow sweeper determines that the position of the snow sweeper has not changed, but detects a condition that the wheels of the snow sweeper move, it may be believed that there is a slipping problem at this time. The preset cleaning region refers to a pre-divided region that needs to be cleaned by the cleaning machine, and its specific size may be set according to demand.

In one embodiment, the step S10, that is, recording, if it is detected that the preset cleaning problem is triggered, the cleaning region corresponding to the triggered preset cleaning problem as the key region includes:

acquiring real-time position change information of the cleaning machine in an electronic map corresponding to the preset cleaning region, and cleaning motion information when the cleaning machine performs the first cleaning operation. Specifically, in this embodiment, each preset cleaning region is marked in the electronic map, and the real-time position change information of the cleaning machine in the preset cleaning region may be fed back and displayed in the electronic map. Understandably, a fixed obstacle may be marked in the electronic map. Therefore, obstacles other than the fixed obstacle may be considered as movable obstacles. The marking information above for the fixed obstacle may also be considered as part of the real-time position change information. Alternatively, after identifying the obstacle through a sensor in the cleaning machine, the position information of the obstacle in the electronic map is determined as the real-time position change information. The sensor for identification includes, but is not limited to, a visual sensor, a millimeter wave radar, and a LiDAR (light detection and ranging). During the cleaning process of one preset cleaning region, the cleaning machine records corresponding cleaning motion information. For example, the cleaning motion information may include whether wheels of the cleaning machine move, the speed and acceleration of the motion, the inclination angle of a vehicle body, and a motion state of various structural components on the cleaning machine during the first cleaning operation.

When determining that the cleaning machine triggers the preset cleaning problem according to the real-time position change information and the cleaning motion information, the key region corresponding to the triggered preset cleaning problem is determined and the key region is marked in the electronic map. In this step, whether the cleaning machine triggers the preset cleaning problem in the current cleaning region may be determined according to the real-time position change information and cleaning motion information above. Then, when it is determined that the preset cleaning problem is triggered, the preset cleaning problem and the key region corresponding to the triggered preset cleaning problem are associatively stored, and the key region is marked in the electronic map for subsequent operations.

S20, a secondary cleaning sequence is obtained by arranging, after the first cleaning operation is completed, all the key regions recorded in the first cleaning operation in a cleaning sequence according to a preset arrangement rule, wherein the preset arrangement rule refers to the arrangement of the cleaning sequence for all the key regions to obtain the secondary cleaning sequence for cleaning all the key regions.

S30, the cleaning machine is controlled to perform a second cleaning operation on all the key regions according to the secondary cleaning sequence. That is to say, after determining the secondary cleaning sequence, an optimal working path may be determined according to the secondary cleaning sequence, and then the second cleaning operation is performed according to the working path.

According to the method for cleaning the key region in the present application, in the first cleaning process, the key regions corresponding to all machines with the preset cleaning problem in the entire preset cleaning region are recorded, then the secondary cleaning sequence is planned according to the recorded key regions, and then the second cleaning operation is performed on all the key regions again according to the above secondary cleaning sequence. In this way, within the same preset cleaning region, the present application carries out targeted secondary cleaning on all the key regions that trigger the preset cleaning problem, without any missed region during cleaning, thereby ensuring a cleaning effect on each preset cleaning region. Secondly, due to the automatic planning of the secondary cleaning sequence for all the key regions, there is no need for manual participation in the planning, which improves the intelligence level of the cleaning process, saves cleaning time, and greatly enhances the efficiency of secondary cleaning.

It should be noted that the key regions mentioned above may be one or more. The secondary cleaning operation is one embodiment, and in other embodiments, multiple cleaning operations may be set to achieve higher cleaning effect, so the number of cleaning times is not limited.

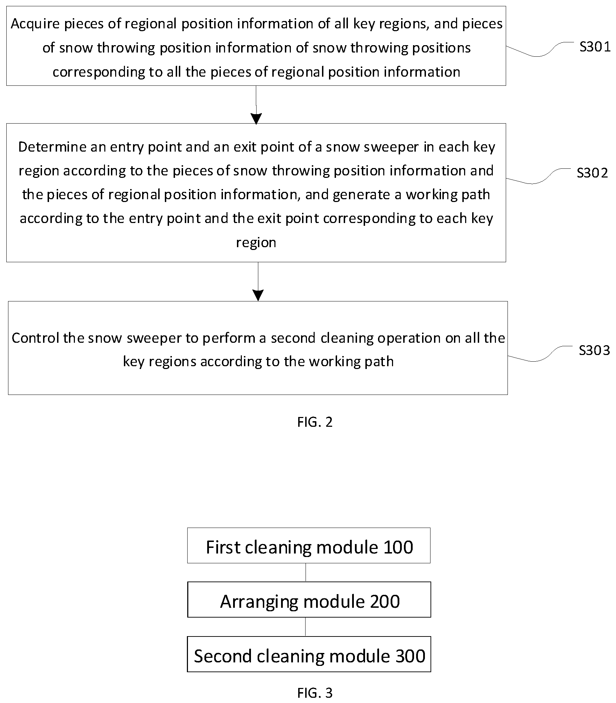

In one embodiment, as shown in FIG. 2, the cleaning machine is a snow sweeper. That is to say, in this embodiment, the cleaning machine may be a snow sweeper. At this time, when each key region is cleaned, the cleaned snow needs to be piled up in a snow throwing position. The snow throwing position refers to a position region specifically set for the preset cleaning region where the cleaned snow needs to be piled up. Further, the step S30, that is, controlling the cleaning machine to perform the second cleaning operation on all the key regions according to the secondary cleaning sequence includes the following steps.

S301, pieces of regional position information of all the key regions, and pieces of snow throwing position information of snow throwing positions corresponding to all the pieces of regional position information are acquired; wherein the regional position information refers to position coordinates, shape, area, and other information corresponding to each key region. The snow throwing position information refers to position coordinates, shape, area, and other information corresponding to the snow throwing position.

S302, an entry point and an exit point of the snow sweeper in each key region are determined according to the pieces of snow throwing position information and the pieces of regional position information, and a working path is generated according to the entry point and the exit point corresponding to each key region. In this embodiment, in the process of planning the working path, it is necessary to refer to the regional position information of each key region and the snow throwing position information, so that the finally-generated working path is the optimal working path and avoids the snow sweeper traveling through excessive ineffective paths.

S303, the snow sweeper is controlled to perform the second cleaning operation on all the key regions according to the working path. That is to say, after determining the working path, the snow sweeper only needs to perform the second cleaning operation according to the working path. It should be noted that when planning the working path, there should be a docking relationship between the entry and exit points of one key region and the previous and next adjacent key regions (that is, an end point of the previous key region should coincide with a start point of the next key region as much as possible) to form a shorter path. In addition, if one key region is too large, a traveling direction for "S"-shaped cleaning of the working path in the key region should be determined based on the above docking relationship, so that in the process that the snow sweeper performs the "S"-shaped cleaning, the docking relationship may be formed between the exit point of the current key region and the entry point of the next adjacent key region.

Further, generating the working path according to the entry point and the exit point corresponding to each key region further includes:
acquiring a positional relationship between each key region and the snow throwing position; and
generating the working path according to the positional relationship and the entry point and the exit point corresponding to each key region. Specifically, since the snow sweeper sweeps snow according to the level of the potential energy, and the level of the potential energy refers to a distance between the snow sweeper and the snow throwing position (the farther the distance, the greater the potential energy for snow throwing) and the direction (the more deviated the direction of the snow sweeper from the snow throwing position, the greater the potential energy for snow throwing). That is to say, in the present application, it is preferred to perform snow throwing treatment from a region with high potential energy to a region with low potential energy. When there are a plurality of key regions, the snow needs to be thrown from one key region to another before being thrown from the last key region to the snow throwing position. In this process, it is necessary to judge the relationship between the key region and the snow throwing position. If the key region is far away from the snow throwing position, the snow sweeper is controlled to travel to a position in the key region close to the snow throwing position (where the snow sweeper stays in the key region and throws the snow), and the snow sweeper is controlled to throw the snow from that position to the snow throwing position. If the key region is close to the snow throwing position, the snow sweeper is controlled to directly throw the snow from the key region to the snow throwing position.

In one embodiment, in the step S302, determining the entry point and the exit point of the snow sweeper in each key region according to the pieces of snow throwing position information and the pieces of regional position information includes:
acquiring base station position information of a charging station corresponding to the snow sweeper; and
determining the entry point and the exit point of the snow sweeper in each key region according to the base station position information, the pieces of snow throwing position information and the pieces of regional position information.

Understandably, in this embodiment, if the charging station is used as the starting point or/and the end point for the second cleaning operation of the snow sweeper, then in the process of planning the working path, the position information of the charging station needs to be taken into account as the starting point or/and the end point, and then the optimal working path is generated by referring to the regional position information of each key region and the snow throwing position information of the snow throwing position, thereby avoiding the snow sweeper traveling through the excessive ineffective paths. Understandably, the charging station may not be used as the starting point or the end point for the second cleaning operation. In this case, according to the above embodiment, the entry point and the exit point of the snow sweeper in each key region are determined only according to the snow throwing position information and the regional position information.

In one embodiment, the step S303, that is, controlling the snow sweeper to perform the second cleaning operation on all the key regions according to the working path includes:
controlling the snow sweeper to start advancing towards a starting point of the working path, and detecting in real-time whether a current passing region meets a preset snow sweeping condition before the snow sweeper reaches the starting point. In this embodiment, due to the possibility that the current environment is still snowing (or has just snowed), other cleaning regions after the previous first cleaning operation may be covered by snow again. At this time, the snow sweeper needs to activate a snow sweeping function after judging that it meets the preset snow sweeping condition, and continue to clean the current passing region, that is, perform a first snow throwing operation. The preset snow sweeping condition may be set according to demand. For example, if there is too much snow or too many ice layers on the road surface in the current passing region, or if it is currently snowing, it may be considered as meeting the preset snow sweeping condition.

The above real-time detection may be performed through a detection module of the snow sweeper. The detection module includes, but is not limited to, a communication module, a visual sensor, a LiDAR, an inertial measurement unit (IMU) sensor or a wheel speedometer, etc. The visual sensor may directly identify images according to the captured road surface images of the current passing path, then determines an ice-snow state on the road surface, and confirms, when it is determined that there is too much snow on the road surface, that the current passing region meets the preset snow sweeping condition. The IMU sensor and the LiDAR may both determine road surface smoothness information in the current passing region. After acquiring a current road slope angle from the motion information of the snow sweeper itself, when it is determined that there is a significant difference between the current road slope angle and the above road surface smoothness information, it may be believed that there is too much snow on the current road surface. At this time, it may also be confirmed that the current passing region meets the preset snow sweeping condition. The wheel speedometer may measure rotation information of the wheels. In this way, in snow or ice scenarios, if the rotation information of the wheels represent that the wheels rotate, but the current motion information of the snow sweeper represents that the position of the snow sweeper has not changed significantly, it may also be confirmed at this time that the current passing region meets the preset snow sweeping condition.

Further, real-time detection of whether the current passing region meets the preset snow sweeping condition may also be determined according to real-time weather information corresponding to the current passing region. This real-time weather information may be acquired through a communication module installed on the snow sweeper. That is, when the real-time weather information acquired by the communication module represents that it is currently snowing (or snowing heavily), it is confirmed that the current passing region meets the preset snow sweeping condition.

When it is detected that the current passing region meets the preset snow sweeping condition, the snow sweeper is controlled to turn on a snow rolling motor and perform a first snow throwing operation on the current passing region. That is to say, when it is judged that the current passing region meets the preset snow sweeping condition, the snow rolling motor is turned on and the first snow throwing operation is performed to timely clear the ice and snow on the road surface. It should be noted that if the snow sweeper keeps the snow rolling motor on for snow sweeping in all regions it currently passes through, the snow sweeper consumes more electric energy in some regions that do not require snow sweeping. Therefore, in this embodiment, the first snow throwing operation is performed after determining the preset snow sweeping condition, which saves the electric energy while ensuring the cleaning effect.

It should be noted that the snow rolling motor corresponds to a snow shoveling bucket in the snow sweeper, and the snow shoveling bucket is internally provided with snow rolling blades. The snow shoveling bucket and the snow rolling motor may be both referred to as a cleaning device.

In one embodiment, the cleaning machine is a snow sweeper, and the preset cleaning problem includes a problem of thick snow accumulation. The problem of thick snow accumulation refers to current snow accumulation exceeding a certain thickness, which makes it impossible for the snow sweeper to shovel all the snow at once and requires shoveling layer by layer.

Further, the step S10, that is, recording, if it is detected that the cleaning machine triggers the preset cleaning problem, the cleaning region corresponding to the triggered preset cleaning problem as the key region includes:
controlling, when it is detected that the cleaning machine triggers the problem of thick snow accumulation, the cleaning machine to perform a second snow throwing operation, so as to remove at least a part of snow in the cleaning region corresponding to the problem of thick snow accumulation, and recording the cleaning region with the part of snow removed as the key region. Understandably, in this embodiment, when confirming that the problem of thick snow accumulation is triggered, the accumulated snow may be too thick, and cleaning only through the second cleaning operation may take too long time and be difficult to clean. Therefore, the key region corresponding to the problem of thick snow accumulation may be cleaned twice. That is, the upper half of the thick accumulated snow is cleaned in the first cleaning operation (the specific cleaning thickness or proportion may be set according to the needs), and the remaining part is removed in the second cleaning operation after being recorded as the key region. Understandably, in the present application, for the key region corresponding to the problem of thick snow accumulation, it is also possible to leave them all removed in the second cleaning operation without any removal during the first cleaning operation. Understandably, when cleaning the key region corresponding to the problem of thick snow accumulation, multiple snow shoveling may be required during each cleaning operation (such as the first cleaning operation or the second cleaning operation). After lifting or lowering the snow shoveling bucket of the snow sweeper during each snow shoveling, the snow sweeper needs to be controlled to first retreat a first preset distance and then advance a second preset distance (the second preset distance is greater than the first preset distance), and then the snow is shoveled in stages.

In one embodiment, the preset cleaning problem includes a problem of multiple slipping. The problem of multiple slipping refers to that in step S10, the triggered multiple preset cleaning problems detected continuously by the cleaning machine are all slipping problems.

Further, the step S10, that is, recording, if it is detected that the cleaning machine triggers the preset cleaning problem, the cleaning region corresponding to the triggered preset cleaning problem as the key region includes:
determining, if it is detected that the cleaning machine triggers the problem of multiple slipping (which may occur at different time points, but the time points of multiple slipping are close), a slipping start point and a slipping end point corresponding to the problem of multiple slipping, recording a slipping path between the slipping start point and the slipping end point as a first region length, and recording a first preset multiple of a width of the cleaning machine as a first region width. The slipping start point refers to a position point corresponding to a slipping problem triggered for the first time among the continuously-detected triggered slipping problems, while the slipping end point refers to a position point corresponding to a slipping problem triggered for the last time among the continuously-detected triggered slipping problems. The first region length may refer to a line connected by a straight line or a curve between the slipping start point and the slipping end point. The first region length may pass through the position points respectively corresponding to all the slipping problems detected multiple times. The width of the cleaning machine may refer to a maximum body width of the cleaning machine, and the first preset multiple may be set according to the needs, such as one maximum body width or half of the maximum body width.

A cleaning region corresponding to the problem of multiple slipping and generated according to the first region length and the first region width is recorded as the key region. That is to say, its width may be widened to a first region width in an extending direction of the first region length, and its corresponding area region is recorded as the key region.

In one embodiment, the preset cleaning problem includes an obstacle problem. The obstacle problem refers to an obstacle related problem encountered by the cleaning machine, and the cleaning machine needs to avoid the obstacle for cleaning when encountering the obstacle.

Further, the step S10, that is, recording, if it is detected that the cleaning machine triggers the preset cleaning problem, the cleaning region corresponding to the triggered preset cleaning problem as the key region includes:
determining, if it is detected that the cleaning machine triggers the obstacle problem, whether other adjacent obstacle regions exist within a preset range around the cleaning region corresponding to the obstacle problem, wherein the other obstacle regions refer to other key regions that have been currently determined as corresponding to other obstacle problems; and
merging and recording, when it is determined that other adjacent obstacle regions exist, the determined other obstacle regions and cleaning region corresponding to the obstacle problem as a new key region.

In this embodiment, if there are multiple other adjacent obstacle regions corresponding to the obstacle problem (i.e. other obstacle problems) around the cleaning region corresponding to the obstacle problem within a preset range (the preset range is set according to the needs, and may be an area range that includes the cleaning region corresponding to the obstacle problem and extends outward along the boundary of the cleaning region by a certain width), then the cleaning region may be fitted and merged with other obstacle regions to form a larger new key region, so as to simplify the workload of working path planning. Due to the larger area, it will also make it easier to avoid obstacles.

In one embodiment, the preset cleaning problem includes a problem of poor network. The problem of poor network refers to a situation where there is a lack of network signal or a large number of network disconnections within a short period of time (within a preset duration).

Further, the step S10, that is, recording, if it is detected that the cleaning machine triggers the preset cleaning problem, the cleaning region corresponding to the triggered preset cleaning problem as the key region includes:
determining, if it is detected that the cleaning machine triggers the problem of poor network, a poor signal starting point and a signal recovery starting point corresponding to the problem of poor network, recording a traveling path between the poor signal starting point and the signal recovery starting point as a second region length, and recording a second preset multiple of a width of the cleaning machine as a second region width. The poor signal starting point refers to a position point corresponding to a time point when the network starts to be disconnected (or a starting time of intermittent network within a preset duration); and the signal recovery starting point refers to a position point corresponding to a starting time point when the signal returns to normal (and remains normal within the preset duration thereafter). The second region length may refer to a line connected by a straight line or curve between the poor signal starting point and the signal recovery starting point. The second region length may pass through some or all of the position points actually passed by the snow sweeper during a time period between the poor signal starting point and the signal recovery starting point. The width of the cleaning machine may refer to a maximum body width of the cleaning machine, and the second preset multiple may be set according to the needs, such as one maximum body width or half of the maximum body width. The second preset multiple may be the same as or different from the first preset multiple.

A cleaning region corresponding to the problem of poor network and generated according to the second region length and the second region width is recorded as the key region. That is to say, its width may be widened to a first region width in an extending direction of the second region length, and then its corresponding area region is recorded as the key region.

It should be understood that in the above embodiment, an order of sequence numbers of the steps does not indicate an execution sequence, and execution sequences of various processes shall be determined according to functions and internal logics thereof and shall not impose any limitation on an implementation process of the embodiment of the present application.

In one embodiment, as shown in FIG. 3, a device for cleaning a key region is provided. The device for cleaning the key region is in one-to-one correspondence to the method for cleaning the key region in the above embodiment. The device for cleaning the key region includes:
a first cleaning module 100, configured to record, when a cleaning machine performs a first cleaning operation on a preset cleaning region and if it is detected that the cleaning machine triggers a preset cleaning problem, a cleaning region corresponding to the triggered preset cleaning problem as a key region;
an arranging module 200, configured to obtain a secondary cleaning sequence by arranging, after the first cleaning operation is completed, all the key regions recorded in the first cleaning operation in a cleaning sequence according to a preset arrangement rule; and
a second cleaning module 300, configured to control the cleaning machine to perform a second cleaning operation on all the key regions according to the secondary cleaning sequence.

According to the device for cleaning the key region in the present application, in the first cleaning process, the key regions corresponding to all machines with the preset cleaning problem in the entire preset cleaning region are recorded, then the secondary cleaning sequence is planned according to the recorded key regions, and then the second cleaning operation is performed on all the key regions again according to the above secondary cleaning sequence. In this way, within the same preset cleaning region, the present application carries out targeted secondary cleaning on all the key regions that trigger the preset cleaning problem, without any missed region during cleaning, thereby ensuring a cleaning effect on each preset cleaning region. Secondly, due to the automatic planning of the secondary cleaning sequence for all the key regions, there is no need for manual participation in the planning, which improves the intelligence level of the cleaning process, saves cleaning time, and greatly enhances the efficiency of secondary cleaning.

The specific limitations about the device for cleaning the key region may refer to the limitations on the method for cleaning the key region above, which is omitted here. Each module in the above device for cleaning the key region may be implemented entirely or partially through software, hardware, or a combination thereof. All the above modules may be embedded in or independent of a processor in a computer device in a hardware form, or stored in a memory in the computer device in a software form for the processor to call and execute the operations corresponding to all the above modules.

In one embodiment, a cleaning machine is provided, and includes a traveling device, a cleaning device, and a controller. The controller includes a memory, a processor, and computer-readable instructions stored in the memory and runnable on the processor, and the processor, when executing the computer-readable instructions, controls the traveling device and the cleaning device to implement the following steps:
recording, when the cleaning machine performs a first cleaning operation on a preset cleaning region and if it is detected that the cleaning machine triggers a preset cleaning problem, a cleaning region corresponding to the triggered preset cleaning problem as a key region;
obtaining a secondary cleaning sequence by arranging, after the first cleaning operation is completed, all the key regions recorded in the first cleaning operation in a cleaning sequence according to a preset arrangement rule; and
controlling the cleaning machine to perform a second cleaning operation on all the key regions according to the secondary cleaning sequence.

In one embodiment, recording, if it is detected that the preset cleaning problem is triggered, the cleaning region corresponding to the triggered preset cleaning problem as the key region includes:
acquiring real-time position change information of the cleaning machine in an electronic map corresponding to the preset cleaning region, and cleaning motion information when the cleaning machine performs the first cleaning operation; and
determining, when determining that the cleaning machine triggers the preset cleaning problem according to the real-time position change information and the cleaning motion information, the key region corresponding to the triggered preset cleaning problem and marking the key region in the electronic map.

In one embodiment, the cleaning machine is a snow sweeper; and controlling the cleaning machine to perform the second cleaning operation on all the key regions according to the secondary cleaning sequence includes:
acquiring pieces of regional position information of all the key regions, and pieces of snow throwing position information of snow throwing positions corresponding to all the pieces of regional position information;
determining an entry point and an exit point of the snow sweeper in each key region according to the pieces of snow throwing position information and the pieces of regional position information, and generating a working path according to the entry point and the exit point corresponding to each key region; and
controlling the snow sweeper to perform the second cleaning operation on all the key regions according to the working path.

In one embodiment, determining the entry point and the exit point of the snow sweeper in each key region according to the pieces of snow throwing position information and the pieces of regional position information includes:
acquiring base station position information of a charging station corresponding to the snow sweeper; and
determining the entry point and the exit point of the snow sweeper in each key region according to the base station position information, the pieces of snow throwing position information and the pieces of regional position information.

In one embodiment, controlling the snow sweeper to perform the second cleaning operation on all the key regions according to the working path includes:
controlling the snow sweeper to start advancing towards a starting point of the working path, and detecting in real-time whether a current passing region meets a preset snow sweeping condition before the snow sweeper reaches the starting point; and
controlling, when it is detected that the current passing region meets the preset snow sweeping condition, the snow sweeper to turn on a snow rolling motor and perform a first snow throwing operation on the current passing region.

In one embodiment, the cleaning machine is a snow sweeper, and the preset cleaning problem includes a problem of thick snow accumulation.

Recording, if it is detected that the cleaning machine triggers the preset cleaning problem, the cleaning region corresponding to the triggered preset cleaning problem as the key region includes:
controlling, when it is detected that the cleaning machine triggers the problem of thick snow accumulation, the cleaning machine to perform a second snow throwing operation, so as to remove at least a part of snow in a cleaning region corresponding to the problem of thick snow accumulation, and recording the cleaning region with the part of snow removed as the key region.

In one embodiment, the preset cleaning problem includes a problem of multiple slipping.

Recording, if it is detected that the cleaning machine triggers the preset cleaning problem, the cleaning region corresponding to the triggered preset cleaning problem as the key region includes:
determining, if it is detected that the cleaning machine triggers the problem of multiple slipping, a slipping start point and a slipping end point corresponding to the problem of multiple slipping, recording a slipping path between the slipping start point and the slipping end point as a first region length, and recording a first preset multiple of a width of the cleaning machine as a first region width; and
recording a cleaning region corresponding to the problem of multiple slipping and generated according to the first region length and the first region width as the key region.

In one embodiment, the preset cleaning problem includes an obstacle problem.

Recording, if it is detected that the cleaning machine triggers the preset cleaning problem, the cleaning region corresponding to the triggered preset cleaning problem as the key region includes:
determining, if it is detected that the cleaning machine triggers the obstacle problem, whether other adjacent obstacle regions exist within a preset range around the cleaning region corresponding to the obstacle problem, wherein the other obstacle regions refer to other key regions that have been currently determined as corresponding to other obstacle problems; and
merging and recording, when it is determined that other adjacent obstacle regions exist, the determined other obstacle regions and cleaning region corresponding to the obstacle problem as a new key region.

In one embodiment, the preset cleaning problem includes a problem of poor network.

Recording, if it is detected that the cleaning machine triggers the preset cleaning problem, the cleaning region corresponding to the triggered preset cleaning problem as the key region includes:
determining, if it is detected that the cleaning machine triggers the problem of poor network, a poor signal starting point and a signal recovery starting point corresponding to the problem of poor network, recording a traveling path between the poor signal starting point and the signal recovery starting point as a second region length, and recording a second preset multiple of a width of the cleaning machine as a second region width; and
recording a cleaning region corresponding to the problem of poor network and generated according to the second region length and the second region width as the key region.

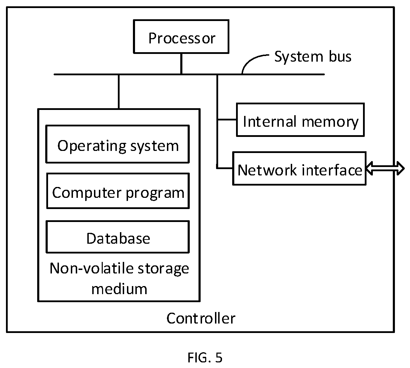

An internal structure diagram of the above controller may be shown in FIG. 5. The controller includes a processor, a memory, a network interface and a database which are connected through a system bus. The processor of the controller is configured to provide computing and control capabilities. The memory of the controller includes a non-volatile storage medium and an internal memory. The non-volatile storage medium stores an operating system, computer-readable instructions and a database. The internal memory provides an environment for running of the operating system and the computer-readable instructions in the non-volatile storage medium. The computer-readable instructions, when executed by the processor, implement the above method for cleaning the key region.

The specific limitations about the controller may refer to the limitations on the method for cleaning the key region above, which is omitted here. Each module in the above controller may be implemented entirely or partially through software, hardware, or a combination thereof. All the above modules may be embedded in the processor in the controller in a hardware form or may be independent of the processor in the controller in a hardware form, or may be stored in the memory in the controller in a software form for the processor to call and perform the operations corresponding to all the above modules.

In one embodiment, one or more readable storage media storing computer-readable instructions are provided. The readable storage medium provided in this embodiment includes a non-volatile readable storage medium and a volatile readable storage medium. The readable storage medium stores computer-readable instructions. The computer-readable instructions, when executed by one or more processors, cause one or more processors to implement the steps of the above method for cleaning the key region.

Those ordinarily skilled in the art may understand that all or some of procedures of the method in the above embodiments may be implemented by computer-readable instructions instructing relevant hardware. The computer-readable instructions may be stored in a non-volatile computer-readable storage medium or a volatile readable storage medium. The computer-readable instructions, when executed, may include the procedures of the embodiments of the above method. Any reference to the memory, the storage, the database, or other media used in the embodiments provided in the present application may all include a non-volatile and/or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache memory. As an illustration and not a limitation, RAM may be obtained in various forms, such as a static RAM (SRAM), a dynamic RAM (DRAM), a synchronous DRAM (SDRAM), a double data rate SDRAM (DDRSDRAM), an enhanced SDRAM (ESDRAM), a synchronous link DRAM (SLDRAM), a rambus direct RAM (RDRAM), direct rambus dynamic RAM (DRDRAM), and a rambus dynamic RAM (RDRAM).

Those skilled in the art can clearly understand that, for the convenience and conciseness of description, only the division of various functional units or modules mentioned above is given as an example. In practical applications, the above functions may be assigned to different functional units or modules according to needs, that is, the internal structure of the apparatus is divided into different functional units or modules to complete all or part of the functions described above.

The above embodiments are only used to illustrate the technical solutions of the present application but not used to limit it. Although the present application has been illustrated in detail with reference to the aforementioned embodiments, those ordinarily skilled in the art should understand that they can still modify the technical solutions recorded in all the aforementioned embodiments, or equivalently replace part of the technical features thereinto. However, these modifications or replacements do not make the nature of the corresponding technical solutions depart from the spirit and scope of the technical solutions of all the embodiments of the present application, and should be included in the scope of protection of the present application.

## Claims

1. A method for cleaning a key region, comprising:
recording, when a cleaning machine performs a first cleaning operation on a preset cleaning region and if it is detected that the cleaning machine triggers a preset cleaning problem, a cleaning region corresponding to the triggered preset cleaning problem as a key region;
obtaining a secondary cleaning sequence by arranging, after the first cleaning operation is completed, all the key regions recorded in the first cleaning operation in a cleaning sequence according to a preset arrangement rule; and
controlling the cleaning machine to perform a second cleaning operation on all the key regions according to the secondary cleaning sequence.

2. The method for cleaning the key region according to claim 1, wherein recording, if it is detected that the preset cleaning problem is triggered, the cleaning region corresponding to the triggered preset cleaning problem as the key region comprises:
acquiring real-time position change information of the cleaning machine in an electronic map corresponding to the preset cleaning region, and cleaning motion information when the cleaning machine performs the first cleaning operation; and
determining, when determining that the cleaning machine triggers the preset cleaning problem according to the real-time position change information and the cleaning motion information, the key region corresponding to the triggered preset cleaning problem and marking the key region in the electronic map.

3. The method for cleaning the key region according to claim 1, wherein the cleaning machine is a snow sweeper; and controlling the cleaning machine to perform the second cleaning operation on all the key regions according to the secondary cleaning sequence comprises:
acquiring pieces of regional position information of all the key regions, and pieces of snow throwing position information of snow throwing positions corresponding to all the pieces of regional position information;
determining an entry point and an exit point of the snow sweeper in each key region according to the pieces of snow throwing position information and the pieces of regional position information, and generating a working path according to the entry point and the exit point corresponding to each key region; and
controlling the snow sweeper to perform the second cleaning operation on all the key regions according to the working path.

4. The method for cleaning the key region according to claim 3, wherein determining the entry point and the exit point of the snow sweeper in each key region according to the pieces of snow throwing position information and the pieces of regional position information comprises:
acquiring base station position information of a charging station corresponding to the snow sweeper; and
determining the entry point and the exit point of the snow sweeper in each key region according to the base station position information, the pieces of snow throwing position information and the pieces of regional position information.

5. The method for cleaning the key region according to claim 3 or 4, wherein controlling the snow sweeper to perform the second cleaning operation on all the key regions according to the working path comprises:
controlling the snow sweeper to start advancing towards a starting point of the working path, and detecting in real-time whether a current passing region meets a preset snow sweeping condition before the snow sweeper reaches the starting point; and
controlling, when it is detected that the current passing region meets the preset snow sweeping condition, the snow sweeper to turn on a snow rolling motor and perform a first snow throwing operation on the current passing region.

6. The method for cleaning the key region according to claim 1, wherein the cleaning machine is a snow sweeper, and the preset cleaning problem comprises a problem of thick snow accumulation; and
recording, if it is detected that the cleaning machine triggers the preset cleaning problem, the cleaning region corresponding to the triggered preset cleaning problem as the key region comprises:
controlling, when it is detected that the cleaning machine triggers the problem of thick snow accumulation, the cleaning machine to perform a second snow throwing operation, so as to remove at least a part of snow in a cleaning region corresponding to the problem of thick snow accumulation, and recording the cleaning region with the part of snow removed as the key region.

7. The method for cleaning the key region according to claim 1, wherein the preset cleaning problem comprises a problem of multiple slipping; and
recording, if it is detected that the cleaning machine triggers the preset cleaning problem, the cleaning region corresponding to the triggered preset cleaning problem as the key region comprises:
determining, if it is detected that the cleaning machine triggers the problem of multiple slipping, a slipping start point and a slipping end point corresponding to the problem of multiple slipping, recording a slipping path between the slipping start point and the slipping end point as a first region length, and recording a first preset multiple of a width of the cleaning machine as a first region width; and
recording a cleaning region corresponding to the problem of multiple slipping and generated according to the first region length and the first region width as the key region.

8. The method for cleaning the key region according to claim 1, wherein the preset cleaning problem comprises an obstacle problem; and
recording, if it is detected that the cleaning machine triggers the preset cleaning problem, the cleaning region corresponding to the triggered preset cleaning problem as the key region comprises:
determining, if it is detected that the cleaning machine triggers the obstacle problem, whether other adjacent obstacle regions exist within a preset range around a cleaning region corresponding to the obstacle problem, wherein the other obstacle regions refer to other key regions that have been currently determined as corresponding to other obstacle problems; and
merging and recording, when it is determined that other adjacent obstacle regions exist, the determined other obstacle regions and cleaning region corresponding to the obstacle problem as a new key region.

9. The method for cleaning the key region according to claim 1, wherein the preset cleaning problem comprises a problem of poor network; and
recording, if it is detected that the cleaning machine triggers the preset cleaning problem, the cleaning region corresponding to the triggered preset cleaning problem as the key region comprises:
determining, if it is detected that the cleaning machine triggers the problem of poor network, a poor signal starting point and a signal recovery starting point corresponding to the problem of poor network, recording a traveling path between the poor signal starting point and the signal recovery starting point as a second region length, and recording a second preset multiple of a width of the cleaning machine as a second region width; and
recording a cleaning region corresponding to the problem of poor network and generated according to the second region length and the second region width as the key region.

10. A cleaning machine, comprising a traveling device, a cleaning device, and a controller, wherein the controller comprises a memory, a processor, and computer-readable instructions stored in the memory and runnable on the processor, and the processor, when executing the computer-readable instructions, controls the traveling device and the cleaning device to implement the following steps:
recording, when the cleaning machine performs a first cleaning operation on a preset cleaning region and if it is detected that the cleaning machine triggers a preset cleaning problem, a cleaning region corresponding to the triggered preset cleaning problem as a key region;
obtaining a secondary cleaning sequence by arranging, after the first cleaning operation is completed, all the key regions recorded in the first cleaning operation in a cleaning sequence according to a preset arrangement rule; and
controlling the cleaning machine to perform a second cleaning operation on all the key regions according to the secondary cleaning sequence.

11. The cleaning machine according to claim 10, wherein recording, if it is detected that the preset cleaning problem is triggered, the cleaning region corresponding to the triggered preset cleaning problem as the key region comprises:
acquiring real-time position change information of the cleaning machine in an electronic map corresponding to the preset cleaning region, and cleaning motion information when the cleaning machine performs the first cleaning operation; and
determining, when determining that the cleaning machine triggers the preset cleaning problem according to the real-time position change information and the cleaning motion information, the key region corresponding to the triggered preset cleaning problem and marking the key region in the electronic map.

12. The cleaning machine according to claim 10, wherein the cleaning machine is a snow sweeper; and controlling the cleaning machine to perform the second cleaning operation on all the key regions according to the secondary cleaning sequence comprises:
acquiring pieces of regional position information of all the key regions, and pieces of snow throwing position information of snow throwing positions corresponding to all the pieces of regional position information;
determining an entry point and an exit point of the snow sweeper in each key region according to the pieces of snow throwing position information and the pieces of regional position information, and generating a working path according to the entry point and the exit point corresponding to each key region; and
controlling the snow sweeper to perform the second cleaning operation on all the key regions according to the working path.

13. The cleaning machine according to claim 12, wherein determining the entry point and the exit point of the snow sweeper in each key region according to the pieces of snow throwing position information and the pieces of regional position information comprises:
acquiring base station position information of a charging station corresponding to the snow sweeper; and
determining the entry point and the exit point of the snow sweeper in each key region according to the base station position information, the pieces of snow throwing position information and the pieces of regional position information.

14. The cleaning machine according to claim 12 or 13, wherein controlling the snow sweeper to perform the second cleaning operation on all the key regions according to the working path comprises:
controlling the snow sweeper to start advancing towards a starting point of the working path, and detecting in real-time whether a current passing region meets a preset snow sweeping condition before the snow sweeper reaches the starting point; and
controlling, when it is detected that the current passing region meets the preset snow sweeping condition, the snow sweeper to turn on a snow rolling motor and perform a first snow throwing operation on the current passing region.

15. The cleaning machine according to claim 10, wherein the cleaning machine is a snow sweeper, and the preset cleaning problem comprises a problem of thick snow accumulation; and
recording, if it is detected that the cleaning machine triggers the preset cleaning problem, the cleaning region corresponding to the triggered preset cleaning problem as the key region comprises:
controlling, when it is detected that the cleaning machine triggers the problem of thick snow accumulation, the cleaning machine to perform a second snow throwing operation, so as to remove at least a part of snow in a cleaning region corresponding to the problem of thick snow accumulation, and recording the cleaning region with the part of snow removed as the key region.

16. The cleaning machine according to claim 10, wherein the preset cleaning problem comprises a problem of multiple slipping; and
recording, if it is detected that the cleaning machine triggers the preset cleaning problem, the cleaning region corresponding to the triggered preset cleaning problem as the key region comprises:
determining, if it is detected that the cleaning machine triggers the problem of multiple slipping, a slipping start point and a slipping end point corresponding to the problem of multiple slipping, recording a slipping path between the slipping start point and the slipping end point as a first region length, and recording a first preset multiple of a width of the cleaning machine as a first region width; and
recording a cleaning region corresponding to the problem of multiple slipping and generated according to the first region length and the first region width as the key region.

17. The cleaning machine according to claim 10, wherein the preset cleaning problem comprises an obstacle problem; and
recording, if it is detected that the cleaning machine triggers the preset cleaning problem, the cleaning region corresponding to the triggered preset cleaning problem as the key region comprises:
determining, if it is detected that the cleaning machine triggers the obstacle problem, whether other adjacent obstacle regions exist within a preset range around the cleaning region corresponding to the obstacle problem, wherein the other obstacle regions refer to other key regions that have been currently determined as corresponding to other obstacle problems; and
merging and recording, when it is determined that other adjacent obstacle regions exist, the determined other obstacle regions and cleaning region corresponding to the obstacle problem as a new key region.

18. The cleaning machine according to claim 10, wherein the preset cleaning problem comprises a problem of poor network; and
recording, if it is detected that the cleaning machine triggers the preset cleaning problem, the cleaning region corresponding to the triggered preset cleaning problem as the key region comprises:
determining, if it is detected that the cleaning machine triggers the problem of poor network, a poor signal starting point and a signal recovery starting point corresponding to the problem of poor network, recording a traveling path between the poor signal starting point and the signal recovery starting point as a second region length, and recording a second preset multiple of a width of the cleaning machine as a second region width; and
recording a cleaning region corresponding to the problem of poor network and generated according to the second region length and the second region width as the key region.

19. One or more readable storage media storing computer-readable instructions, wherein the computer-readable instructions, when executed by one or more processors, cause the one or more processors to implement the following steps:
recording, when a cleaning machine performs a first cleaning operation on a preset cleaning region and if it is detected that the cleaning machine triggers a preset cleaning problem, a cleaning region corresponding to the triggered preset cleaning problem as a key region;
obtaining a secondary cleaning sequence by arranging, after the first cleaning operation is completed, all the key regions recorded in the first cleaning operation in a cleaning sequence according to a preset arrangement rule; and
controlling the cleaning machine to perform a second cleaning operation on all the key regions according to the secondary cleaning sequence.

20. The readable storage medium according to claim 19, wherein recording, if it is detected that the preset cleaning problem is triggered, the cleaning region corresponding to the triggered preset cleaning problem as the key region comprises:
acquiring real-time position change information of the cleaning machine in an electronic map corresponding to the preset cleaning region, and cleaning motion information when the cleaning machine performs the first cleaning operation; and
determining, when determining that the cleaning machine triggers the preset cleaning problem according to the real-time position change information and the cleaning motion information, the key region corresponding to the triggered preset cleaning problem and marking the key region in the electronic map.
